# EUROPEAN PATENT SPECIFICATION

(11) **EP 1 540 301 B1**
(45) Date of publication and mention of the grant of the patent: **10.12.2008**
(21) Application number: 03795505.1
(22) Date of filing: 16.09.2003
(51) Int. Cl.: G01N 1/00

(54) **METHOD FOR TRANSFERRING A PRESSURISED FLUID SAMPLE INTO A SAMPLE BOTTLE BY MEANS OF AN INJECTION NEEDLE**
VERFAHREN ZUM TRANSFERIEREN EINER DRUCKBEAUFSCHLAGTEN FLUIDPROBE IN EINE PROBENFLASCHE MITTELS EINER INJEKTIONSNADEL
PROCEDE DE TRANSFERT D'UN ECHANTILLON D'UN FLUIDE PRESSURISE DANS UNE BOUTEILLE DE PRELEVEMENT AU MOYEN D'UNE AIGUILLE D'INJECTION

(30) Priority: 16.09.2002 NO 20024415
(43) Date of publication of application: 15.06.2005
(73) Proprietor: FJERDINGSTAD, Solve, 1410 Kolbotn (NO)
(72) Inventor: FJERDINGSTAD, Solve, 1410 Kolbotn (NO)
(74) Representative: Brunner, Michael John
(86) International application number: PCT/NO2003/000317
(87) International publication number: WO 2004/025271

(56) References cited:
- US-A- 5 012 845
- US-A- 5 578 495
- US-A1- 2002 006 360

## Description

The invention relates to a method for transferring a representative pressurized fluid sample into a sample bottle. By the phrase "representative fluid sample" is here meant a sample in which the fluid is substantially identical to the fluid from which the sample is taken; i.e. in which the fluid has not been contaminated or otherwise changed or influenced by the exterior during the sampling operation itself.

EP patent 548 187 discloses a sampling method and assembly for taking representative samples from pressurized fluid systems, particularly hydraulic or lubricating oil systems. In some cases, however, the patented sampler may not be able to secure a completely representative fluid sample. In particular this is so in cases where it is desirable to analyse the gas contents of a fluid. An example, is samples from insulation oil in a transformer which, when it is old and worn, looses its insulation properties, resulting in danger of explosion caused by sparks that may occur owing to the insulation defects. Such sparks result in the formation of free acetylene and hydrogen which could be detected in a gas chromatograph. The latter gas, in particular, appears in very low concentrations and is very elusive. Thus, a prerequisite for obtaining a correct result from an analysis, that accurately indicates the amount of hydrogen in the sample, is that no gas escapes during the sampling operation. Similarly, when sampling fluids included in processes of the food industry or pharmaceutic or medical processes, it is most important that sterile samples are not contaminated by micro organisms. In such cases the fluid sample would normally be tapped directly into a sampling bottle which is then sealed by a fluid-tight membrane. Also in this case there is the danger that the sample fluid be contaminated when transferred to the sample bottle.

The invention according to the present application provides a simple and effective solution of the above problem. The solution consists in transferring the fluid sample from the pressurized fluid system into the empty, possibly sterilized sample bottle which has been pre-sealed by a high elasticity membrane or diaphragm, by injection via a double-walled needle penetrating the membrane, such as defined in the accompanying patent claim.

The invention will now be described in detail, with reference to the accompanying, partly schematic drawings in which
Figure 1 illustrates a traditional membrane-sealed sample bottle, and
Figures 2 and 3 illustrate the injection needle according to the invention in two stages during sampling.

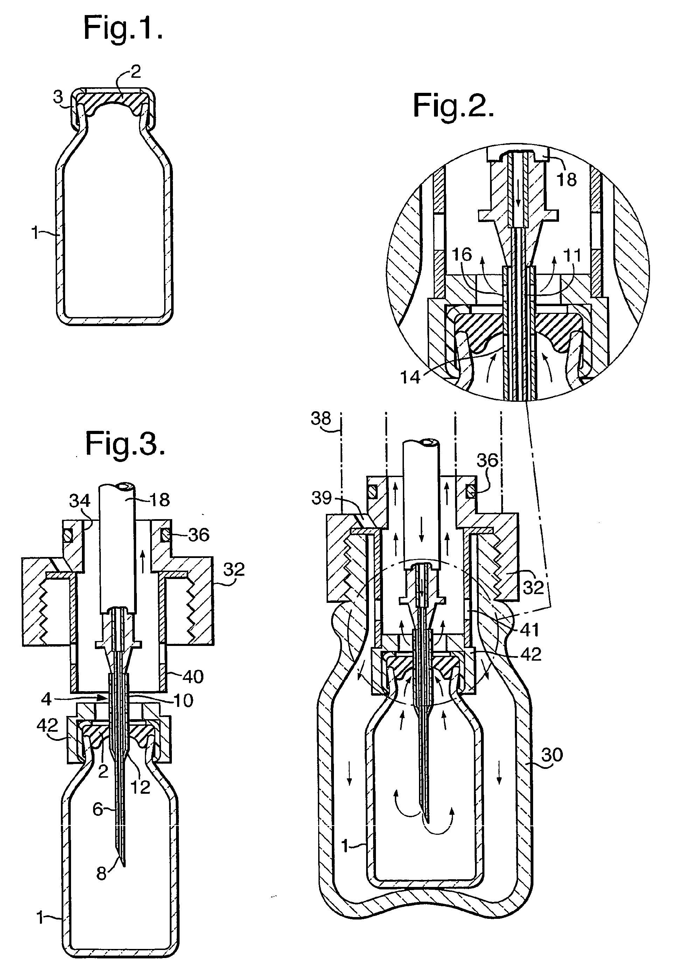

The sample bottle 1 illustrated in fig. 1 is of the usual type for "hermetically" sealed storing of a fluid sample, such as those used within medicine and pharmacy. It would normally be made from glass, with a relatively wide mouth which is closed by a closure member in the form of a relatively thin-walled plug or "membrane" made of a rubber-elastic material (elastomer). The membrane 2 is retained in position over the bottle mouth in a wellknown manner, such as by a circumferential plastic seal 3, for example.

The essential aspect of the invention is the use of a hollow, double-walled, perforated needle 4 as illustrated in fig. 2 and 3, for injecting a fluid sample into the sample bottle 1. The needle 4 comprises a tubular inner wall 6 having a bevelled needle point 8, generally similar to that of an ordinary injection needle. The inner wall 6, at least along an upper portion thereof (i.e. spaced from the needle point 8), is surrounded by a tubular outer wall 10 radially spaced from the inner wall 6 to form an annulus 11. The outer wall 10, at the lower end thereof (i.e. the end proximate needle point 8), has a conically tapering portion 12 sealingly closing about inner wall 6. Further, as an essential feature of the invention, the outer wall 10 is provided with apertures 14 and 16, respectively, at two longitudinally spaced levels.

One example of using the needle 4 according to the invention, for injecting a fully representative fluid sample into a closed sample bottle as discussed above, is as follows.

The fluid is part of a pressurized circulating fluid system, e.g. of the same kind as described in EP 548 187. The following example is based on use of the needle according to the invention in connection with a circulating pressurized fluid system of the latter kind.

In fig. 1 the sample bottle 1 is placed in a pressure vessel 30 which in this example is bottle-shaped with a threaded top portion mating with a correspondingly threaded cap 32 having a central opening 34 and circumferential seal ring 36 for sealingly connecting the bottle cap 32 to the pressurized fluid system of interest, such as via a tube 38 as indicated with broken lines in fig. 2, and closing and shut-off valves and pressure release valves (not shown) as necessary. Centrally directly below the cap opening 34 there is a sleeve 40 the lower end of which slidingly fits onto an upper portion of an adapter 42 at top of the sample bottle 1, thereby retaining the latter positioned in pressure vessel 30 during the sampling operation. The side wall of sleeve 40 has apertures 41 permitting free fluid through-flow.

Needle 4 is connected to a valved fluid supply pipe 18 extending down from the fluid source of interest with its lower end portion sealingly surrounding an upper end portion of the inner wall 6 of the needle 4, while the upper end of the outer wall 10 is preferably sealingly engaging the end face of the supply pipe 18. The supply pipe 18 with needle 4 extends centrally down through the opening 34 in the pressure bottle cap 32 which, together with supply pipe 18 and tube 38, would preferably be stationary installed, for example fixedly connected to the fluid source armature (not shown).

In fig. 2 the needle 4 has penetrated the elastic membrane 2 of the sample bottle 1 to a level at which the edge or peripheral portion surrounding the hole in the penetrated membrane sealingly engages the unbroken portion of the needle outer wall 10 between the upper and lower apertures 16, 14 therein. In this position of the needle 4 fluid will flow, as indicated with arrows in fig. 2, from supply pipe 18 in through the central bore of the needle tubular inner wall 6 and out into sample bottle 1 at the needle point 8, thence into the annulus 11 through the lower aperture 14 in outer wall 10 below membrane 2, out again from the annulus through the upper aperture 16 above the membrane and into the pressure bottle 30 through the apertures 41, and thence back into the fluid source via tube 38.

When the fluid flow through the sample bottle has continued for a certain period of time securing that the fluid present in the sample bottle, that be a liquid, gas or both, is fully representative of the fluid of the fluid source, the supply of fluid is interrupted, the pressure in the pressurized vessel 30 is relieved and the vessel removed from the cap 32, leaving the sample bottle containing the fluid sample of interest freely suspended in the sleeve 40. When the sample bottle 1 is now pulled away from sleeve 40 down to the position shown in fig. 3, where also the lower aperture 14 in the needle outer wall is above membrane 2, the fluid path through the needle annulus 11 is closed. Upon continued pulling down of the sample bottle until needle 4 lets go of membrane 2, the hole made by the needle when penetrating the membrane will be completely closed owing to the rubber elastic nature of the membrane, so that neither gas nor liquid will escape from the bottle. In order to provide an additional safe guarding of the tightness of the membrane hole, a piece of tape could be placed across the hole.

In fig. 2 the upper aperture 16 in the needle outer wall 10 is shown as a distinct perforation in the outer wall. Instead the upper aperture 16 could be provided by the opening or mouth at the upper end of the tubular outer wall 10, which in that case would not sealingly engage the end face of supply pipe 18.

As note above, the needle 4 would normally be stationary and penetrate membrane 2 by lifting the sample bottle onto the needle from below, but the arrangement may of course be vice versa, i.e. keeping the sample bottle stationary while moving the needle from above down through the membrane.

The vessel 30 with cap 32 does not necessarily have to be formed by a pressure-resistant material, even if the pressure of the fluid source is relatively high. Instead, the vessel 30 with cap and sample bottle 1 therein could be placed in the pressure chamber 2 of a sampler according to EP 548 187. The bottle cap 32 would then substantially correspond to the bottle cap 24 of the sampler and dimensioned to replace the latter cap in a such sampler, and be provided with a fluid path into said pressure chamber as indicated at 39. The upper part 6 of pressure chamber 2 in the sampler would then replace tube 38 in the above described example, and in other respects be adapted to the supply pipe 18 with needle 4.

## Claims

1. Method for transferring a representative fluid sample from a pressurized fluid source into a sample bottle (1) having an opening closed by a membrane (2) made from a rubber-elastic material, by means of an injection needle (4) comprising a tubular inner wall (6) formed with a needle point (8), and a tubular outer wall (10) being radially spaced from the inner wall (6) and concentrically surrounding the inner wall (6) at least along a portion thereof being distant from the needle point (8) and, at its end facing the needle point, having a conically tapering portion (12) engaging the inner wall (6), said outer wall (10) having apertures (14,16) being spaced from each other with respect to the longitudinal axis of the outer wall (10); said method comprising:
placing the closed sample bottle (1) into a pressure vessel (30) provided with a cap (32) having a central opening (34) communicating with the pressurized fluid source via a tube (38);
connecting the upper end of the inner wall (6) of the needle (4) to a fluid supply pipe (18) extending from said pressurized fluid source;
inserting the needle (4) into the sample bottle (1) through the membrane (2) to a level at which the penetrated portion of the membrane sealingly engages the outer wall (10) of the needle between the spaced apertures (14,16) in the outer wall, such that initially some of the fluid that is injected into the bottle is allowed to flow into the annulus between the inner and outer walls of the needle (4), through a first one (14) of said apertures (14,16) of the outer wall below the membrane (2), and thence out through a second one (16) of said apertures (14,16) of the outer wall above the membrane, and thence back into the fluid source via tube (38).

## Patentansprüche

1. Verfahren zum Übertragen einer repräsentativen Fluidprobe aus einer unter Druck stehenden Fluidquelle in eine Probenflasche (1), die eine Öffnung hat, welche durch eine Membran (2) aus gummielastischem Material verschlossen ist, mittels einer Injektionsnadel (4), die eine röhrenförmige Innenwandung (6) aufweist, die mit einem Nadelpunkt (8) gebildet ist, und eine röhrenförmige Außenwandung (10), die radial beabstandet von der Innenwandung (6) ist und die Innenwandung (6) in mindestens einem Abschnitt derselben, der vom Nadelpunkt (8) entfernt ist, konzentrisch umgibt und an ihrem dem Nadelpunkt gegenüberliegenden Ende einen konisch sich verjüngenden Abschnitt (12) hat, der in die Innenwandung (6) eingreift, wobei die Außenwandung (10) Öffnungen (14, 16) hat, die voneinander bezüglich der Längsachse der Außenwandung (10) beabstandet sind, wobei das Verfahren aufweist:
Platzieren der geschlossenen Probenflasche (1) in einem Druckgefäß (30), welches mit einer Kappe (32) versehen ist, die eine mit der unter Druck stehenden Fluidquelle über ein Rohr (38) in Verbindung stehende zentrale Öffnung (34) hat;
Verbinden des oberen Endes der Innenwandung (6) der Nadel (4) mit einer Fluidzufuhrleitung (18), die sich von der unter Druck stehenden Fluidquelle erstreckt;
Einsetzen der Nadel (4) in die Probenflasche (1) durch die Membran (2) bis zu einem Niveau, bei dem der penetrierte Abschnitt der Membran in dichtendem Eingriff mit der Außenwandung (10) der Nadel zwischen den beabstandeten Öffnungen (14, 16) in der Außenwandung steht, derart, dass anfänglich etwas von dem Fluid, welches in die Flasche injiziert wird, durch eine erste (14) der Öffnungen (14, 16) der Außenwand unter der Membran (2) in den Ringspalt zwischen der Innen- und der Außenwand der Nadel fließen kann, und somit aus einer zweiten (16) der Öffnungen (14, 16) der Außenwand über der Membran und somit durch das Rohr (38) zurück in die Fluidquelle.

## Revendications

1. Procédé pour transférer un échantillon fluide représentatif depuis une source pressurisée du fluide dans une bouteille d'échantillon (1) ayant une ouverture fermée par une membrane (2) constituée d'un matériau caoutchouc-élastique, à l'aide d'une aiguille d'injection (4), comprenant une paroi interne tubulaire (6) formée d'une pointe d'aiguille (8), et une paroi externe tubulaire (10), radialement espacée de la paroi interne (6) et entourant de manière concentrique la paroi interne (6), au moins sur une partie de celle-ci distante de la pointe d'aiguille (8) et sur son extrémité du côté de la pointe d'aiguille, ayant une partie biseautée de manière conique (12) en prise avec la paroi interne (6), ladite paroi externe (10) présentant des ouvertures (14, 16) espacées l'une de l'autre par rapport à l'axe longitudinal de la paroi externe (10) ; ledit procédé comprenant :
le placement de la bouteille d'échantillon fermée (1) dans un récipient sous pression (30) muni d'un bouchon (32) ayant une ouverture centrale (34) en communication avec la source de fluide pressurisé via un tube (38) ;
la connexion de l'extrémité supérieure de la paroi interne (6) de l'aiguille (4) à une conduite d'alimentation du fluide (18) s'étendant depuis ladite source de fluide pressurisé ;
l'insertion de l'aiguille (4) dans la bouteille d'échantillon (1) par la membrane (2) à un niveau auquel la partie pénétrée de la membrane est en contact de scellement avec la paroi externe (10) de l'aiguille entre les ouvertures espacées (14, 16) dans la paroi externe, de sorte qu'initialement, une partie du fluide qui est injecté dans la bouteille, peut s'écouler dans l'anneau entre les parois interne et externe de l'aiguille (4), par une première (14) des ouvertures (14, 16) de la paroi externe sous la membrane (2), et peut ressortir par une deuxième (16) des ouvertures (14, 16) de la paroi externe au-dessus de la membrane, et donc, avec un retour vers la source de fluide via le tube (38).
